# EUROPÄISCHE PATENTANMELDUNG

(11) **EP 1 072 771 A1**
(43) Veröffentlichungstag der Anmeldung: **31.01.2001**
(21) Anmeldenummer: 99810687.6
(22) Anmeldetag: 29.07.1999
(51) Int. Cl.: F02C 3/16, F02K 7/00

(54) **Gasturbine mit integriertem Rückstosstriebwerk**

(71) Anmelder: Asea Brown Boveri AG, 5401 Baden (CH)
(72) Erfinder: Döbbeling, Klaus Dr., 5210 Windisch (CH); Steinbach, Christian Dr., 5432 Neuenhof (CH)

(57) **Zusammenfassung**

Auf einer Welle (1) einer Gasturbine wird stromab eines Verdichters (3) eine Scheibe (6) angeordnet. Auf dieser Scheibe werden aussermittig am Umfang eine Anzahl von Rückstosstriebwerken (8) so angeordnet, dass ein im Betrieb resulteirender Schubvektor eine Komponente in Drehrichtung der Welle aufweist. Die Rückstosstriebwerke weisen bevorzugt Mittel auf, die vorderhand der Verbrennung eine weitere Verdichtung des Arbeitsmediums bewirken, ohne zusätzliche Turboverdichterstufen zu erfordern. Die Wärmezufuhr zum Gasturbinen-Kreisprozess findet in den Triebwerken bei dem erhöhten Druck statt, wodurch der Wirkungsgrad des Gasturbinenprozesses verbessert wird. Das Abgas aus den Triebwerken strömt in eine stromab der Scheibe gelegene Sektion (402). Einbauten (9) in diesem Bereich dienen zur Gleichrichtung und Homogenisierung der Triebwerksabströmungen, gegebenenfalls auch zur weiteren Wärmezufuhr. In einer konventionellen Turbine (5) wird das Abgas unter Abgabe von Nutzleistung weiter entspannt.

## Beschreibung

### Technisches Gebiet

Die vorliegende Erfindung betrifft das Gebiet der Gasturbinen.

### Stand der Technik

Bei Gasturbinen, die ohne Rekuperation der Abgaswärme zur Vorwärmung der Verbrennungsluft arbeiten, steigt der theoretische Wirkungsgrad mit dem Druckverhältnis des Arbeitsprozesses. Zur Realisierung hoher Druckverhältnisse in Gasturbinen werden heute üblicherweise vielstufige Turboverdichter eingesetzt. In der Realität ist die Verdichtung in jeder der Verdichterstufen verlustbehaftet, so, dass mit der Stufenanzahl, also mit dem Druckverhältnis, auch die Verluste wieder ansteigen. Hinzu kommt, dass mit zunehmendem Druckverhältnis natürlich auch die Durchströmungsquerschnitte immer kleiner werden, und zwar aus verschiedenen Gründen stärker, als unvermeidlliche Leckagespalte. In der Realität gibt es daher ein Wirkungsgradoptimum über dem Druckverhältnis von Gasturbinen. Bei den heute üblichen Prozesstemperaturen und erreichbaren Verdichterwirkungsgraden wird dieses Optimum in der Umgebung eines Druckverhältnisses um 40 erreicht, in einer Grössenordnung also, in der modernste Gasturbinen bereits arbeiten. Zudem führen hohe Prozessdrücke zu einer mechanischen Beanspruchung thermisch hochbelasteter Strukturen. Eine weitere Erhöhung des Druckverhältnises auf konventionellem Wege ist also mit erheblichen Schwierigkeiten verbunden.

Auf der anderen Seite ist seit langem bekannt, durch Staustrahleffekte oder stehende akustische Wellen innerhalb gewisser Grenzen eine Verdichtung zu erzielen. Diese Methode wurde bis anhin beim Bau von kleinen, leichten und billig zu produzierenden Strahltriebwerken angewandt. Ein solches Triebwerk ist beispielsweise aus der US 3,093,962 bekannt. Bemerkenswert an dem dort vorgestellten Triebwerk ist, dass es vollkommen ohne bewegliche Teile auskommt. Andererseits arbeiten solche Strahltriebwerke für sich genommen sehr ineffizient. Der Einsatz solcher Verdichtungsmethoden für Nutzleistungsgasturbinen ist aufgrund des geringen Wirkungsgrades höchst unattraktiv. Weiterhin ist auch das mit derartigen Methoden erreichbare Druckverhältnis viel zu klein, um für den wirtschaftlichen Einsatz in Gasturbinen in Frage zu kommen.

### Darstellung der Erfindung

Ziel der Erfindung ist es, bei Gasturbinen eine Verbrennung bei höheren Drücken zu realisieren, als dies bisher bei Gasturbinen mit Turboverdichtern der Fall war, ohne gleichzeitig die oben angesprochenen Nachteile in Kauf zu nehmen.

Erfindungsgemäss wird dies dadurch erreicht, dass eine Gasturbine an sich bekannter Art zwischen einem am weitesten stromab angeordneten Verdichter und einer am weitesten stromauf angeordneten Turbine, also in dem Bereich, in dem eine konventionelle Gasturbine mit Turboverdichter den höchsten Druck aufweist, mit mindestens einer auf einem Rotor der Gasturbine angeordneten Scheibe versehen wird. Das Gehäuse der Gasturbine ist an der korrespondierenden Stelle mit einem kreisförmigen Innenquerschnitt gestaltet, so, dass zwischen Rotor und Gehäuse ein ringförmiger Raum gebildet wird. Die Scheibe und das Gehäuse sind dabei derart aufeinander angepasst, dass die Scheibe gegen das Gehäuse dichtet, und den ringförmigen Raum in eine stromauf und eine stromab der Scheibe gelegene Sektion teilt. Die Scheibe ist erfindungsgemäss mit Öffnungen versehen, welche die beiden Sektionen verbinden. In jeder Öffnung ist ein Rückstosstriebwerk angeordnet, das prinzipiell - im einfachsten Fall - aus einem Durchströmkanal besteht, in dessen Innerem Mittel zur Einbringung und zur Verbrennung eines Brennstoffs angeordnet sind. Im Betrieb wird Arbeitsmedium der Gasturbine vom Turboverdichter angesaugt und verdichtet, und strömt durch einen Einströmbereich des Rückstosstriebwerkes, der auf der stromauf gelegenen Seite der Scheibe liegt, in das Rückstosstriebwerk ein. Im Inneren des Rückstosstriebwerks wird Brennstoff zugeführt und verbrannt, was in einer Beschleunigung der Strömung und damit in einem stromauf gerichteten Schub beim Ausströmen des Arbeitsmediums auf der stromab gelegenen Seite der Scheibe führt. Der Arbeitsprozess der Rückstosstriebwerke kann dabei durchaus sowohl stationär als auch instatonär ablaufen. Die Rückstosstriebwerke werden nunmehr erfindungsgemäss derart auf der Scheibe angeordnet, dass der resultierende Schubvektor eine Komponente in Umfangsrichtung aufweist. Damit erzeugen die Rückstosstriebwerke ein Moment an der Welle, auf welcher die Scheibe angeordnet ist.

Der Geist der Erfindung kommt dann zu seiner vollen Entfaltung, wenn im Einströmbereich der Triebwerke Mittel zu einer weiteren Verdichtung des bereits im Turbokompressor hochverdichteten Arbeitsmediums vorhanden sind. Da die Rückstosstriebwerke unzugänglich bei hohen Temperaturen und Drücken im Inneren der Gasturbine angeordnet sind, ist es natürlich von Vorteil, wenn sie dabei ohne bewegte Teile auskommen. Bevorzugt können daher beispielsweise Triebwerke der einleitend kurz beschriebenen Art mit einer akustischen Verdichtung zum Einsatz kommen.

Vorangehend wurde bemerkt, dass Schwierigkeiten beim Einsatz solcher Triebwerke das geringe erzielbare Druckverhältnis und die hohen Verluste der Verdichtung, wie auch der geringe thermodynamische Wirkungsgrad eines solchen Triebwerks - um 10 % - seien, welche Aussage als solche durchaus aufrechterhalten werden kann. Bei dem erfindungsgemässen Einsatz ist dieses jedoch im Gesamtkontext der Gasturbine zu sehen. Das beschriebene geringe Druckverhältnis wird nämlich bei einem bereits stark angehobenen Druckniveau erzielt. Bezogen auf den gesamten Gasturbinenprozess resultiert also eine signifikante Erhöhung des oberen Drucknivieaus, was zu einer Verbesserung des gesamten - zunächst theoretischen - Prozesswirkungsgrades führt, dies, ohne zusätzliche, bei bereits sehr hohen Drücken wie einleitend beschrieben , problematische Turboverdichterstufen einzusetzen. Die extrem hohe Verlustleistung des Triebwerkes ist in den Expansionsstufen der Gasturbine nutzbar. Die Technik, die für sich genommen als nicht wirtschaftlich verwertbar angesehen wurde, kann also durch die erfindungsgemässe Assimilation in eine andere, ebenfalls an sich bekannte Technik genutzt werden, und beide Techniken gehen im Geiste der Erfindung eine geradezu symbiotische Verbindung ein.

Es wird bei der Realisierung der Erfindung unumgänglich sein, mehrere Rückstosstriebwerke auf der Scheibe anzuordnen, dies bereits, um einen hinreichend grossen Durchströmquerschnitt in axialer Richtung für das Arbeitsmedium zur Verfügung zu stellen. Weiterhin sollen selbstverständlich Unwuchten der Scheibe vermieden werden. Auch eine Anordnung zumindest mehrerer Triebwerke auf einem Radius der Scheibe und in identischer Orientierung zum Umfang der Scheibe ist von Vorteil, nicht zuletzt aufgrund der Strömungskinematik, die auf diese Weise für alle Rückstosstriebwerke identisch ist. Im Hinblick auf die Strömungskinematik des aus den Rückstosstriebwerken ausströmenden Heissgases kann die Gestaltung des Ausströmbereiches der sowohl als rein konvergente Düse als auch als Lavaldüse sinnvoll sein, was im einzelnen eine Frage der Thermodynamik und der Geometrie einer konkreten Ausführung der Erfindung sein wird. Dabei wird die Expansion in den Überschall in Strömungsmaschinen in einer Lavaldüse oft als problembehaftet betrachtet. Einerseits kann dies im vorliegenden Fall aber notwendig sein, um bei einer hohen Umfangsgeschwindigkeit des Triebwerkes noch eine Umfangskraft zu induzieren. Andererseits ist zu beachten, dass die Überschallgeschwindigkeit auf das Relativsystem des umlaufenden Triebwerks bezogen ist, und im absoluten Bezugssystem der stromab folgenden Sektion des ringförmigen Raumes durchaus ohne weitere Verzögerung eine Unterschallströmung vorliegen kann und bei zweckmässiger Auslegung der Kinematik auch wird.

Dem stromab der Scheibe folgenden Raum kommt im Rahmen der Erfindung ebenfalls eine entscheidende Bedeutung zu. Die Triebwerke werden mit einer hohen Geschwindigkeit durchströmt, was die Verweilzeit des Heissgase bei hohen Temperaturen und Drücken klein hält. Dies reduziert zwar die Stickoxidbildung, jedoch muss mit einem sehr schlechten Ausbrand gerechnet werde. Um nunmehr keine extremen Emissionen von Teil- und Unverbranntem zu haben, muss der nachfolgende Raum hinreichend gross ein, um eine Ausreaktion der Verbrennungsprodukte zu gewährleisten. Auch die Heissgastemperatur muss noch hinreichend hoch sein, um eine weitere Oxidation von teil- und unverbranntem Brennstoff zu gewährleisten. Unter Umständen ist das Heissgas in den Düsen der Rückstosstriebwerke aber schon so weit expandiert, dass eine Nacherhitzung des Heissgases notwendig ist. Hierzu kann die der Scheibe stromab folgende Sektion auch als selbstzündende Brennkammer aufgebaut sein.

Weiterhin wird dieser Bereich mit Vorteil Strömungslenkeinrichtungen beinhalten, welche die Abströmung aus den Triebwerken in Umfangsrichtung homogenisieren und in eine definierte Richtung lenken, um nachfolgende Komponenten der Gasturbine mit einer gleichmässigen und definierten Heissgasströmung zu beaufschlagen.

Nachfolgend wird das immer noch gespannte Heissgas konventionell in einer Expansionsturbine weiter entspannt, wobei auch weitere Zwischenerhitzungsstufen zwischen den Expansionsstufen möglich sind.

Die erfindungsgemässe Ausführung einer Gasturbine bietet also die Möglichkeit, den oberen Prozessdruck, bei dem Wärme zugeführt wird, zu erhöhen, ohne weitere Turboverdichterstufen einzusetzen. Hierdurch wird ein Potenzial für weitere Wirkungsgradsteigerungen eröffnet. Als weiterer Vorteil der erfindungsgemässen Ausführung ist die geringere mechanische Belastung der thermisch belasteten Strukturen zu erwähnen. Der höchste Druck liegt in den geometrisch vergleichsweise kleinen Rückstosstriebwerken vor, und zwar nur als Differenzdruck gegen den Verdichterenddruck. Die grossen Oberflächen des Gehäuses haben dementsprechend nicht die gesamte Druckbelastung aufzunehmen, sondern nur den Verdichterenddruck gegen den Umgebungsdruck. Ebenso können bei zweckmässiger Auslegung und Abstimmung der Rückstosstriebwerke und des stromab der Scheibe folgenden Raumes günstige Emissionswerte erzielt werden, da die Verweilzeit der Reaktionsprodukte bei in den Rückstosstriebwerken sehr gering ist, woraus eine geringe Stickoxidbildung resultiert, während eine Nachreaktionszone nachgeschaltet ist, in der Teil- und Unverbranntes bei moderateren thermodynamischen Bedingungen weiter oxidiert wird.

Die erfindungsgemässe Ausführung eignet sich prinzipbedingt besonders zum Einsatz in Gasturbinen mit sehr hohen Druckverhältnissen, die insbesondere auch mit einer Zwischenkühlung zwischen zwei Verdichterabschnitten und mit rekuperativen Wärmetauschern oder mit einer - gegebenenfalls weiteren - Nachverbrennung zwischen zwei Sektionen der Turbine ausgestattet sind, und wie sie bevorzugt in kombinierten Gas-Dampfkraftwerken eingesetzt werden.

Aus dem Wesen der Erfindung ergeben sich weiterhin vorteilhafte thermodynamische Prozessführungen die oben implizit beschrieben werden, und in den Ansprüchen ebenfalls gekennzeichnet sind.

### Kurze Beschreibung der Zeichnung

Die Erfindung wird nachfolgend anhand der Zeichnung erläutert. Es zeigt
- Fig. 1 die Erfindung im Kontext einer Gasturbine
- Fig. 2 eine Frontansicht der Scheibe mit den Rückstosstriebwerken
- Fig. 3 ein Segment einer selbstzünden Brennkammer, wie es mit Vorteil in der stromab der Scheibe gelegenen Sektion des ringförmigen Raumes eingesetzt wird
- Fig. 4 einen Längsschnitt durch ein in Fig. 3 dargestelltes Segment.

Die Zeichnungen und das folgende Ausführungsbeispiel sind lediglich illustrativ. Im Rahmen der durch die Ansprüche definierten Grenzen kann die Erfindung selbstverständlich auch von dem folgenden Beispiel verschieden ausgeführt werden.

### Weg zur Ausführung der Erfindung

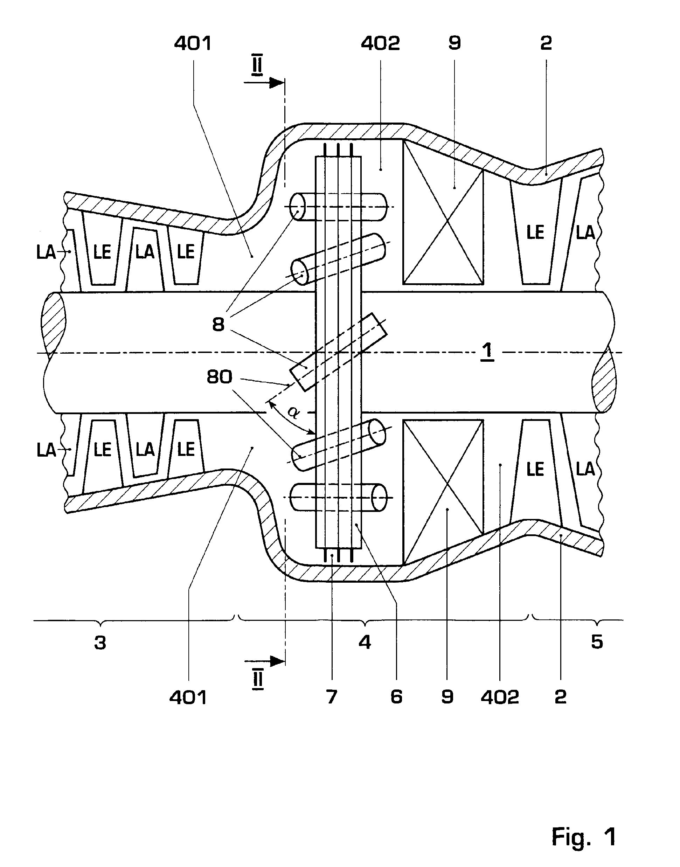

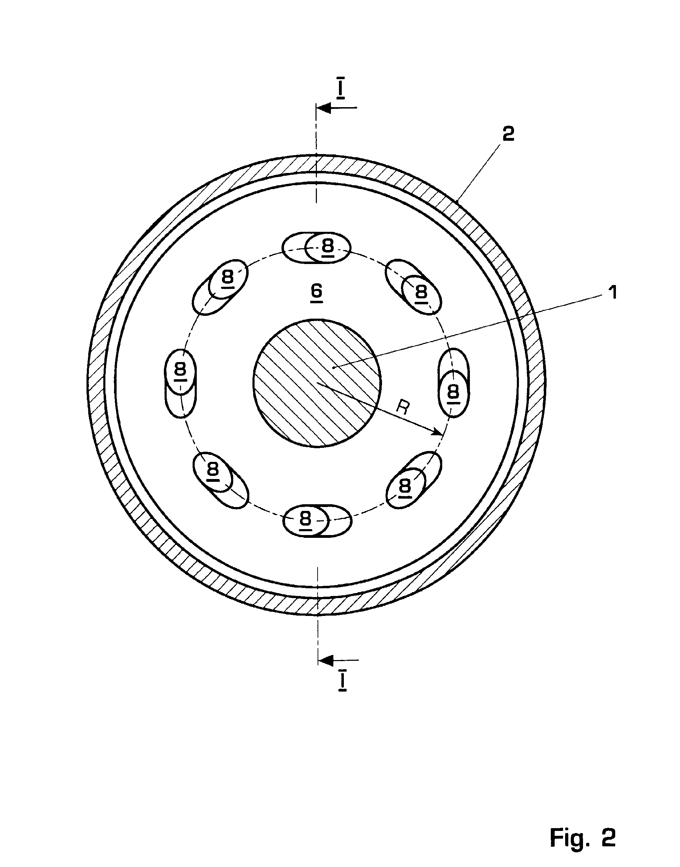

Am einfachsten wird das Wesen der vorliegenden Erfindung anhand der Figuren 1 und 2 erkennbar, die eine erfindungsgemässe Gasturbine in einem Längsschnitt und in einem Querschnitt stark schematisiert darstellen. Auf der Welle 1 sind Laufschaufeln LA angeordnet, während im Gehäuse 2 die Leitschaufeln LE befestigt sind. Diese bilden einen Verdichter 3 und eine Turbine 5, zwischen denen ein ringförmiger Raum 4 angeordnet ist, in dem die Wärmezufuhr zum Prozess stattfindet. Auf der Welle 1 ist eine Scheibe 6 koaxial angeordnet. Der Aussendurchmesser der Scheibe entspricht dabei weitgehend dem Gehäuseinnendurchmesser im Bereich des ringförmigen Raumes, dergestalt, dass die Scheibe 6 beispielsweise mittels einer Labyrinthdichtung 7 gegen das Gehäuse 2 abdichtet. Der ringförmige Raum 4 wird somit in eine stromauf der Scheibe gelegene Sektion 401 und eine stromab der Scheibe gelegene Sektion 402 geteilt. Auf einem Kreis mit Radius R der Scheibe sind Öffnungen angebracht, in denen Rückstosstriebwerke durch die Scheibe hindurch die stromauf gelegene Sektion 401 und die stromab gelegene Sektion 402 verbinden. Die Rückstosstriebwerke sind mit ihren Schubachsen 80, also der Richtung, in der im Betrieb ein resultierender Schubvektor orientiert ist, unter einem Winkel α, der von 90° verschieden ist, gegen die Umfangsrichtung der Scheibe angestellt, so, dass aus einer Schubkraft eines Rückstosstriebwerks eine Umfangskraft an der Scheibe resultiert. Es müssen nicht unbedingt alle Rückstosstriebwerke auf einem Kreis gleichen Durchmessers angeordnet sein, und auch die in Fig. 2 dargestellte Anzahl von 8 Triebwerken ist keineswegs zwingend. Ratsam ist es jedoch, auf einem Kreis wenigstens zwei Triebwerke anzuordnen, und zwar in gleichmässigen Winkelabständen, um keine zu grossen Unwuchten des Rotors entstehen zu lassen. Die Rückstosstriebwerke sind im weiteren nur schematisch dargestellt, und können eine deutlich von der dargestellten Form verschiedene Aussenkontur aufweisen.

Die Rückstosstriebwerke weisen Strömungskanäle auf, durch welche im Betrieb Arbeitsmedium aus dem Verdichter in die stromab gelegene Sektion 402 strömt. Sie weisen in ihrem Inneren nicht dargestellte und in diesem Rahmen nicht spezifizierte Mittel zur Zufuhr eines Brennstoffs in die Strömung verdichteten Arbeitsmediums auf, weiterhin Mittel zur zusätzlichen Verdichtung des Arbeitsmediums. Hier sind insbesondere Triebwerke geeignet, bei denen durch eine bestimmte Form des inneren Strömungskanal, bestimmte Längenverhältnisse der Strömungswege und sonstige geeignete Mittel, wie sie beispielsweise in der US 3,093,962 beschrieben sind, eine stehende Druckwelle im Inneren der Triebwerke entsteht. Der Wirkungsgrad solcher Triebwerke für sich genommen ist zwar äusserst unbefriedigend, jedoch steht die Verlustleistung bei der Entspannung des Arbeitsmediums in der Turbine wieder zur Verfügung. Dagegen kommen solche Triebwerke ohne bewegte Teile aus, was bei dem angestrebten Einsatz im Inneren einer Gasturbine ein grosser Vorteil ist.

In Bezug auf den Wirkungsgrad ist weiterhin festzustellen, dass durch die Rückstosstriebwerke der obere Prozessdruck erhöht und somit der Wirkungsgrad der Gesamtanlage verbessert wird.

Dem zusätzlich verdichteten Arbeitsmedium wird in den Rückstosstriebwerken 8 eine Brennstoffmenge zugeführt und dort entzündet. Das Arbeitsmedium strömt durch Ausströmbereiche der Rückstosstriebwerke in die stromab gelegene Sektion 402, und erzeugt, in Abhängigkeit von der Umfangsgeschwindigkeit der Triebwerke und der Austrittsgeschwindigkeit des Arbeitsmediums, einen Schub, der in Abhängigkeit von dem Anstellwinkel a eine Umfangskraft auf die Scheibe hervorruft. Während die Umfangsgeschwindigkeit durch die Geometrie und die Drehzahl der Scheibe 6 weitgehend vorgegeben ist, kann die Ausströmgeschwindigkeit - es ist hier die Geschwindigkeit im Relativsystem der Scheibe gemeint - durch die Geometrie des Ausströmbereichs der Triebwerke in einem weiten Rahmen variiert werden. Diese bestimmt weiterhin den Grad der Expansion des Arbeitsmediums. Da die Scheibe 6 durch die Dichtung 7 gegen das Gehäuse abgedichtet ist, können auch unterschiedliche Drücke in den Sektionen 401 und 402 realisiert werden. Selbstverständlich kann die Auslegung auch so erfolgen, dass der Schub rein reaktiv erzeugt wird, die Drücke in den Sektionen 401 und 402 also gleich sind. Es kann dann prinzipiell auf die Dichtung 7 verzichtet werden.

Die Absolut- und Relativgeschwindigkeiten am Austritt aus den Rückstosstriebwerken sind im Übrigen vollkommen analog denen am Austritt aus einem Turbinenlaufgitter miteinander veknüpft, und können in analoger Weise durch Geschwindigkeitsdreiecke dargestellt werden.

Aus der stromab der Scheibe gelegenen Sektion 402 strömt das Arbeitsmedium zwecks weiterer Entspannung unter Leistungsabgabe in die Turbine 5 ein. Die Strömung, die in die erste Turbinenstufe einströmt, sollte aus den dem Fachmann geläufigen Gründen in Umfangsrichtung möglichst homogen sein, und eine definierte Strömungsrichtung aufweisen. Beide Bedingungen sind bei der Abströmung des Arbeitsmediums aus den Rückstosstriebwerken 8 nur sehr schlecht beziehungsweise nur in einem kleinen Betriebsbereich erfüllt. Daher wird die stromab der Scheibe gelegene Sektion 402 hinreichend gross gewählt, um insbesondere eine Ausmischung von Umfangsinhomogenitäten zu ermöglichen. Die Ausrichtung und Homogenisierung der Strömung kann durch geeignete innerhalb der stromab gelegenen Sektion angeordnete Mittel 9, auf deren Form und konkrete Ausgestaltung hier nicht näher eingegangen wird, verbessert werden.

Die Dimension der Sektion 402, und damit verbunden die Verweilzeit des Arbeitsgases in dieser, ist weiterhin wichtig, um eine Ausreaktion von teil- und unverbrannten Brennstoffkomponenten zu erreichen. In diesem Zusammenhang kommt ein weiterer Vorteil der Erfindung zum tragen. Die Wärmezufuhr zum Arbeitsmedium findet nämlich bei sehr hohem Druck und sehr hoher Temperatur statt, woraus einerseits ein hoher Wirkungsgrad des Kreisprozesses resultiert. Andererseits resultieren die hohen thermodynamische Daten vorderhand in einer starken Stickoxidbildung. Jedoch werden die Gase unmittelbar wieder in den Rückstossdüsen der Triebwerke entspannt und abgekühlt, wodurch die Verweilzeit der Gase bei sehr hohen Temperaturen kurz gehalten wird, was wiederum die Stickoxidbildung bei gegebener oberer Prozesstemperatur gegenüber einer herkömmlichen Brennkammer reduziert. In der stromab der Scheibe gelegenen Sektion 402 ist die Temperatur des Arbeitsmediums zwar um einen Betrag gesenkt, der eine deutliche Verringerung der Stickoxidbildung bedeutet, jedoch bei hinreichend grosser Verweilzeit einen weitgehenden Umsatz von Kohlenmonoxid und Kohlenwasserstoffradikalen ermöglicht.

Aus EP 0 620 362 ist eine Gasturbinenanlage bekanntgeworden, bei der stromab wenigstens einer Turbine eine zusätzliche selbstzündende Brennkammer zur Nacherhitzung teilentspannten Arbeitsmediums angeordnet ist. Die erfindungsgemässe Brennkammer ist in ganz besonderem Masse als Hochdruckbrennkammer in einer solchen Konfiguration geeignet, da sie, wie oben beschrieben, insbesondere zur Realisierung einer Verbrennung bei sehr hohen Drücken konzipiert ist.

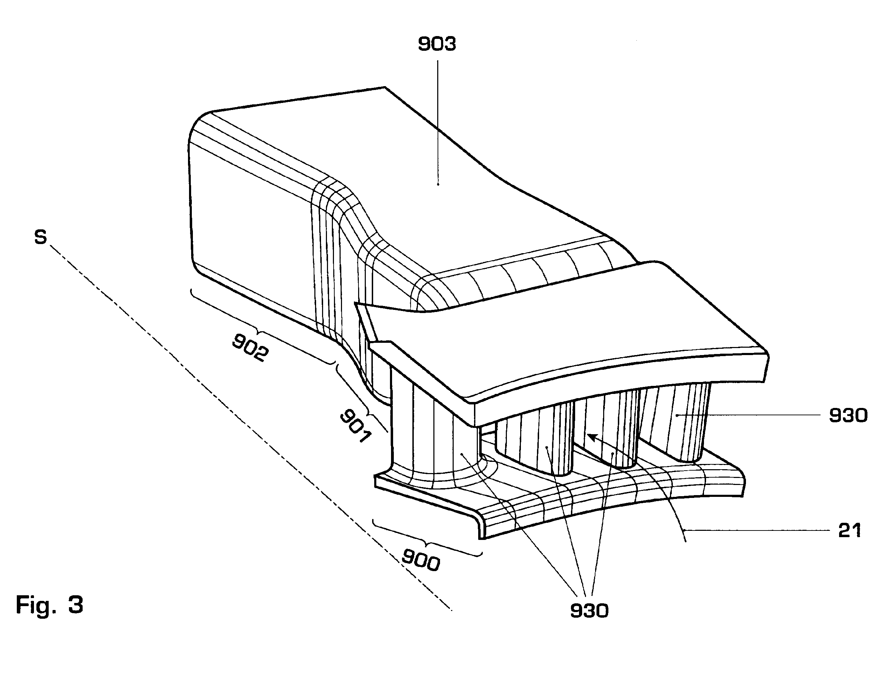

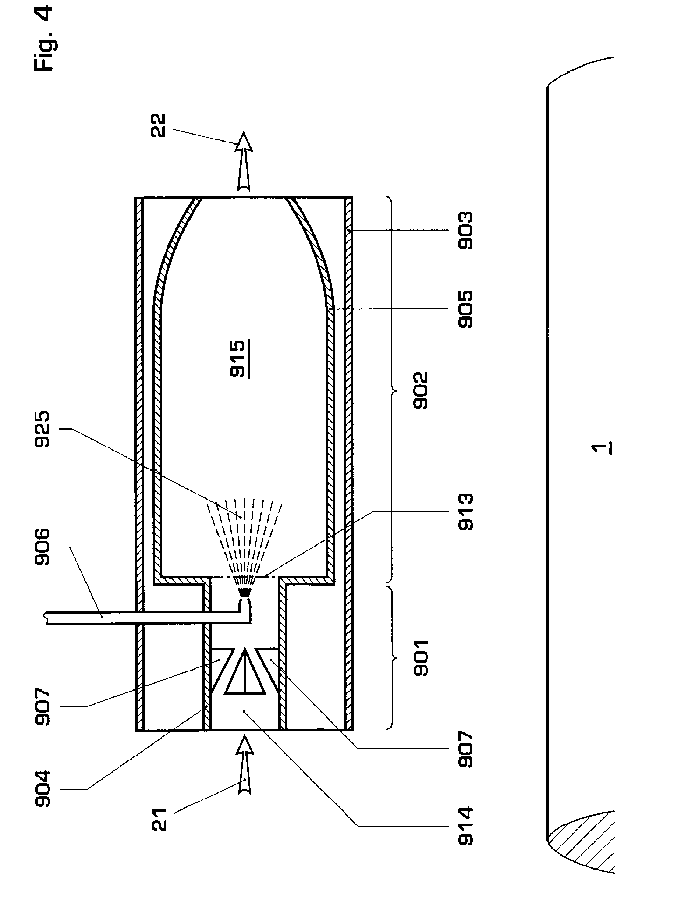

Eine erste Entspannung des Arbeitsmediums findet bereits in den Ausströmbereichen der Rückstosstriebwerke statt. Bei einem entsprechend hohen Druckverhältnis über die Ausströmbereiche der Rückstosstriebwerke kann es thermodynamisch bereits wieder interessant sein, diesem teilentspannten Arbeitsmedium in der stromab der Scheibe gelegenen Sektion 402 wieder Wärme zuzuführen. Im überwiegenden Fall der Anwendungsfälle wird die Temperatur des Arbeitsmediums nach der ersten Entspannung, beim Eintritt in die Sektion 402, hinreichend hoch sein, um eine spontane Selbstentzündung eines eingebrachten Brennstoffes zu gewährleisten. Damit ist es möglich, die in der Sektion 402 eingebauten Mittel 9 als selbstzündende Brennkammer zu gestalten. Die in den Figuren 3 und 4 dargestellten Varianten sind aus EP 0 669 500 und EP 0 835 996 bekanntgeworden. Die selbstzündende Brennkammer ist in Umfangsrichtung um die Welle 1 der Gasturbine herum angeordnet. Es kann sich dabei um eine einzelne umfangssymmetrische Struktur handeln, es kann aber auch eine Vielzahl einzelner kleinerer selbstzündender Brennkammern, wie sie in Fig.3 dargestellt sind, in Umfangsrichtung nebeneinander angeordnet sein. Die gesamte Struktur ist in axialer Richtung, in Fig. 3 durch die Linie S angedeutet, in drei Abschnitte unterteilt, und zwar in eine erste Zone 900, in der Leiteinrichtungen 930 die Strömung des teilentspannten Arbeitsmediums 21 in eine definierte Richtung ausrichten, Sowie zwei weitere Zonen 901 und 902, deren Bedeutung erst in einem Längsschnitt durch das Gehäuse 903 klar zutage tritt.

In dem in Fig. 4 dargestellten Längsschnitt wird die selbstzündende Brennkammer von links nach rechts durchströmt. Die Strömungsleiteinrichtungen 930 enthält sind in Fig. 4 nicht dargestellt. Aus den Strömungsleiteinrichtungen strömt das teilentspannte Arbeitsmedium 21 in den Strömungskanal 914 der Mischzone 901. Die Zuströmung mit einer wohldefinierten Strömungsrichtung ist wichtig, um gerade bei hohen Strömungsgeschwindigkeiten im Strömungskanal 914 eine ausreichende Wirkung der wirbelerzeugenden Elemente 907 innerhalb des Strömungskanals 914 zu gewährleisten. Die wirbelerzeugenden Elemente erzeugen Turbulenz im Strömungskanal 914. Stromab der wirbelerzeugenden Elemente ist ein Mittel 906 vorgesehen, durch welches der Strömung des Arbeitsmediums ein Brennstoff 925 zuführbar ist. In den Wirbeln, die die Elemente 907 in der Strömung des Arbeitsmediums erzeugen, vermischt sich der Brennstoff 925 sehr schnell und intensiv mit dem Arbeitsmedium, und aufgrund der hohen Temperatur entzündet sich der Brennstoff spontan. Aufgrund des Querschnittssprunges beim Übergang in den Strömungskanal 915 der Reaktionszone 902 bildet sich eine Rückströmzone aus, und es kann sich eine Flammenfront 913 stabilisieren. Das nacherhitzte Arbeitsmedium 22 strömt schliesslich in die hier nicht dargestellte Turbine 5 ein. Selbstverständlich ist auch nach einer weiteren teilweisen Entspannung in der Turbine eine zusätzliche Nachverbrennung möglich, wie in EP 0 620 362 vorgeschlagen.

Die Nachverbrennung des teilentspannten Arbeitsmediums birgt eine Reihe von Vorteilen. Dazu gehört unter anderem die Realisierung eines guten Ausbrandes bei geringer thermischer Stickoxidbildung. Wie oben dargestellt, ist der Verweilzeit der Verbrennungsgase bei hohen Temperaturen und Drücken, die der Stickoxidbildung förderlich sind, in den Rückstosstriebwerken gering. Die schnelle Abkühlung des Verbrennungsgase kann aber den negativen Effekt nach sich ziehen, dass ein erheblicher Teil des Brennstoffes unvollständig reagiert, was in einem hohen Ausstoss von Kohlenmonoxid und unverbrannten Kohlenwasserstoffen resultiert. Durch die beschriebene sequentielle Verbrennung werden diese Restprodukte in der selbstzündenden Brennkammer umgesetzt, wohingegen die Wärmefreisetzungsrate in der selbstzündenden Brennkammer auf Werte beschränkt bleibt, bei denen nur geringe Stickoxidmengen gebildet werden.

Aufgrund der hohen Temperatur des teilentspannten Arbeitsmediums 21 ist eine effiziente Kühlung der Strukturen 9 erforderlich. Die Kühlung der selbstzündenden Brennkammer ist allerdings nicht erfindungswesentlich, und wird an anderen Stellen, wie EP 0 669 500 oder EP 0 835 996 ausführlich beschrieben. An dieser Stelle wird auf eine explizite Darstellung der Kühlvorrichtungen verzichtet. Jedoch ist in Fig. 4 erkennbar, dass die selbstzündende Brennkammer zweischalig aufgebaut ist. Zwischen einer äusseren Wand 903 und einer inneren Wand 905 des Brennraums ist eine Möglichkeit vorgesehen, Kühlmittel zur Abfuhr von Wärme aus der thermisch sehr hoch belasteten inneren Brennraumwand 905 hindurchzuleiten. Ebenso muss auch die Kanalwand 904 des Strömungskanals 914 im Bereich der Mischzone 901 gekühlt werden, da das einströmende teilentspannte Arbeitsmedium 21 sich bereits auf einer sehr hohen Temperatur befindet. Aus dem gleichen Grund sind schliesslich auch Mittel zur Kühlung der Strömungsleiteinrichtungen 930 zwingend vorzusehen.

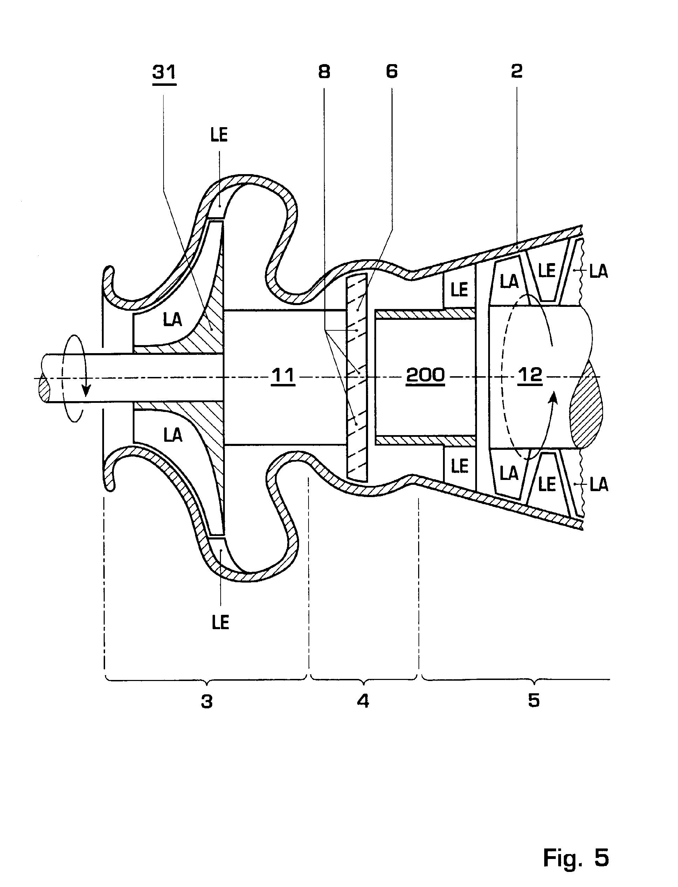

Eine weitere bevorzugte Ausführungsform der erfindungsgemässen Gasturbine ist in Fig. 5 dargestellt. Dabei ist die Gasturbine zweiwellig ausgeführt. Die Scheibe 6 mit den Rückstosstriebwerken 8 ist gemeinsam mit einem Radialverdichter 31 auf einer Verdichterwelle 11 angeordnet. Der Verdichter kann auch ein mehrstufiger Radial- oder Axialverdichter sein. Die Rückstosstriebwerke treiben also unmittelbar den Verdichter an. stromab dfer Scheibe ist ein stationäres Einbauteil 200 vorgesehen, das eine erste Leitschaufelreihe trägt. Weiter stromab ist eine konventionelle Nutzleistungsturbine 5 auf einer zweiten Welle 12 angeordnet. Diese könnte durchaus auch mit einem Niederdruckverdichter gekoppelt sein, im Ausführungsbeispiel wird aber die gesamte Verdichterleistung von den Rückstosstriebwerken geliefert. Interessant ist in diesem Beispiel, dass die Nutzleistungswelle 12 sich entgegengesetzt zur Verdichterwelle 11 dreht, was durch die Pfeile gekennzeichnet ist. Dadurch kann eine Umfangskomponente der Abströmung aus den Triebwerken 8 unmittelbar als Anströmung für das erste Laufrad der Nutzleistungsturbine genutzt werden; das erste Turbinenleitrad ist dann im wesentlichen zur Gleichrichtung der Laufradanströmung in unterschiedlichen Betriebszuständen und zur Umfangshomogenisierung der Laufradanströmung vorhanden.

Selbstverständlich kann auch die in Fig. 5 dargestellte Gasturbine mit der vorhergehend beschriebenen Nacherhitzung des Arbeitsmediums ausgestattet werden.

Die Erfindung, wie sie in den Ansprüchen gekennzeichnet ist, ermöglicht eine Vielzahl weiterer Ausführungsvarianten, die sich dem Durchschnittsfachmann gerade im Lichte der oben dargestellten ausgewählten Beispiele eröffnen.

### Bezugszeichenliste

- 1: Welle
- 2: Gehäuse
- 3: Verdichter
- 4: ringförmiger Raum, Verbrennungszone
- 5: Turbine
- 6: Scheibe
- 7: Dichtung
- 8: Rückstosstriebwerk
- 9: stromab der Scheibe in der Heissgasströmung angeordnete Mittel
- 11: Verdichterwelle
- 12: Nutzleistungswelle
- 21: teilentspanntes Arbeitsmedium
- 22: nacherhitztes Arbeitsmedium
- 31: Radialverdichter-Laufrad
- 80: Schubachse, Orientierung des Schubvektors
- 200: Statoreinbau
- 401: stromauf der Scheibe gelegene Sektion des ringförmigen Raums
- 402: stromab der Scheibe gelegene Sektion des ringförmigen Raums
- 900: erste Zone einer selbstzündenden Brennkammer
- 901: Mischzone
- 902: Reaktionszone
- 903: Gehäuse, äussere Wand
- 904: Kanalwand
- 905: innere Wand
- 906: Mittel zur Einbringung eines Brennstoffs
- 907: wirbelerzeugende Elemente
- 913: Flammenfront, Querschnittssprung
- 914: Strömungskanal
- 915: Strömungskanal
- 925: Brennstoff
- 930: Leiteinrichtung
- LA: Laufschaufeln
- LE: Leitschaufeln
- R: Radius
- α: Anstellwinkel

## Patentansprüche

1. Gasturbine, in welcher Gasturbine in eine Durchströmungsrichtung des Arbeitsmediums wenigstens je ein Verdichter (3), eine Verbrennungszone (4), und eine Turbine (5) angeordnet sind, und in welcher Gasturbine durch ein zu der Gasturbine gehörendes Gehäuse (2) und wenigstens eine Welle (1) der Gasturbine zwischen einem am weitesten stromab gelegenen Verdichter und einer am weitesten stromauf gelegenen Turbine ein ringförmiger Raum ausgebildet ist, wobei auf einer Welle wenigstens eine koaxiale Scheibe (6) angeordnet ist, deren Aussendurchmesser näherungsweise dem Innendurchmesser des Gehäuses entspricht, wodurch der ringförmige Raum in eine stromauf der Scheibe gelegene Sektion (401) und eine stromab der Scheibe gelegene Sektion (402) unterteilt ist, welche Sektionen durch wenigstens eine aussermittig in der Scheibe angeordnete Öffnung verbunden sind, wobei in jeder der mindestens ein Öffnungen ein Rückstosstriebwerk (8) angeordnet ist, welches Rückstosstriebwerk an einem Ende, das zu der stromauf der Scheibe gelegenen Sektion weist, Mittel zum Einströmen eines Arbeitsmediums aufweist, welches Rückstosstriebwerk an einem zweiten Ende, welches zweite Ende zu der stromab der Scheibe gelegenen Sektion einen Ausströmbereich aufweist, innerhalb welchem Rückstosstriebwerk weiterhin Mittel zur Einbringung und zur Verbrennung eines Brennstoffes vorhanden sind, und welches Rückstosstriebwerk unter einem Winkel zum Umfang der Scheibe geneigt ist, dergestalt, dass ein beim Betrieb des Rückstosstriebwerks resultierender Schubvektor (80) eine Komponente in Umfangsrichtung der Welle der Gasturbine, auf welcher die Scheibe angeordnet ist, aufweist.

2. Gasturbine nach Anspruch 1, wobei die Scheibe (6), die dem Verdichter (3) zugehörigen Laufschaufeln, und die der Turbine (5) zugehörigen Laufschaufeln auf einer gemeinsamen Welle (1) angeordnet sind.

3. Gasturbine nach Anspruch 1, welche Gasturbine über wenigstens zwei Wellen (11, 12) verfügt.

4. Gasturbine nach Anspruch 3, wobei wenigstens zwei Wellen unterschiedliche Drehrichtung aufweisen.

5. Gasturbine nach Anspruch 3, wobei wenigstens eine Scheibe (6) mit wenigstens einem Verdichterlaufrad (31) auf einer gemeinsamen Welle (11) angeordnet ist, und die Laufschaufeln einer Nutzleistungsturbine auf einer weiteren Welle (12) angeordnet sind.

6. Gasturbine nach Anspruch 1, wobei am Umfang der Scheibe (6) eine Dichtung (7) angeordnet ist, welche gegen die Innenwand des Gehäuses (2) dichtet.

7. Gasturbine nach Anspruch 1, wobei die Rückstosstriebwerke Mittel zu einer weiteren Verdichtung des Arbeitsmediums stromauf einer Verbrennungszone im Inneren der Rückstosstriebwerke aufweisen.

8. Gasturbine nach Anspruch 7, wobei die Mittel zur weiteren Verdichtung des Arbeitsmediums daraus bestehen, dass die Mittel zum Einströmen des Arbeitsmediums und der Ausströmbereich eines Rückstosstriebwerks derart dimensioniert und aufeinander abgestimmt sind, um einen definierten Modus einer stehenden Welle innerhalb des Rückstosstriebwerks zu erzeugen.

9. Gasturbine nach Anspruch 1, wobei die Rückstosstriebwerke instationär arbeitende Rückstosstriebwerke sind.

10. Gasturbine nach Anspruch 1, wobei auf wenigstens einem Radius (R) einer Scheibe eine Anzahl von Rückstosstriebwerken in identischer Orientierung zum Umfang der Scheibe angeordnet sind.

11. Gasturbine nach Anspruch 1, wobei der Ausströmbereich des Rückstosstriebwerkes als konvergente Düse ausgebildet ist.

12. Gasturbine nach Anspruch 1, wobei der Ausströmbereich des Rückstosstriebwerks als Lavaldüse ausgebildet ist.

13. Gasturbine nach Anspruch 1, wobei die stromab der Scheibe gelegene Sektion (402) des ringförmigen Raumes Mittel (9) zur Einbringung eines Brennstoffs aufweist.

14. Gasturbine nach Anspruch 1, wobei die stromab der Scheibe gelegene Sektion (402) des ringförmigen Raumes Mittel (9) zur Vergleichmässigung einer Strömung des Arbeitsmediums in Umfangsrichtung beinhaltet.

15. Gasturbine nach Anspruch 1, wobei die stromab der Scheibe gelegene Sektion (402) des ringförmigen Raumes Mittel (9) zur Umlenkung einer Strömung des Arbeitsmediums in eine definierte Strömungsrichtung beinhaltet.

16. Gasturbine nach Anspruch 13, wobei in der stromab der Scheibe gelegenen gelegenen Sektion (402) des ringförmigen Raums Mittel (930) zur Vergleichmässigung und zur axialen Ausrichtung einer Strömung des Arbeitsmediums angeordnet sind, weiterhin stromab dieser Mittel Strömungskanäle (914) angeordnet sind, an deren Wänden sich wirbelerzeugende Elemente (907) befinden, und bei welcher Gasturbine die Mittel (906) zur Einbringung eines Brennstoffs (925) stromab der wirbelerzeugenden Elemente angeordnet sind, und welche Strömungskanäle an einem stromabwärtigen Ende mit einer sprunghaften Querschnittserweiterung (913) in einen Brennraum (915) münden, und wobei das Arbeitsmedium die Strömungskanäle mit einer Temperatur durchströmt, die hinreichend hoch ist, um eine Selbstentzündung des eingebrachten Brennstoffes zu bewirken.

17. Verfahren zum Betrieb einer Gasturbine nach Anspruch 1, wobei in wenigstens einem Verdichter (3) ein Arbeitsmedium auf einen ersten Druck verdichtet wird, welches Arbeitsmedium in die stromauf der Scheibe (6) gelegene Sektion (401) des ringförmigen Raumes einströmt, und von dort in das Rückstosstriebwerk (8) einströmt, wo das Arbeitsmedium durch geeignete Mittel auf einen zweiten Druck gebracht wird, welcher zweite Druck höher als der erste Druck ist, wobei in dem Rückstosstriebwerk ein Brennstoff mit dem Arbeitsmedium vermischt und verbrannt wird, das erwärmte Arbeitsmediums durch den Ausströmabschnitt des Triebwerks ausströmt, und dabei einen Schub erzeugt, welcher als Umfangskraft an der Scheibe wirksam wird, in der stromab der Scheibe gelegenen Sektion (402) des ringförmigen Raumes ein vollständiger Ausbrand stattfindet, und das Arbeitsmedium in eine Turbine (5) geleitet und entspannt wird.

18. Verfahren zum Betrieb einer Gasturbine nach Anspruch 16, wobei in wenigstens einem Verdichter (3) ein Arbeitsmedium auf einen ersten Druck verdichtet wird, welches Arbeitsmedium in die stromauf der Scheibe (6) gelegene Sektion (401) des ringförmigen Raumes einströmt, und von dort in das Rückstosstriebwerk (8) einströmt, wo das Arbeitsmedium durch geeignete Mittel auf einen zweiten Druck gebracht wird, welcher zweite Druck höher als der erste Druck ist, wobei in dem Rückstosstriebwerk ein Brennstoff mit dem Arbeitsmedium vermischt und verbrannt wird, das erwärmte Arbeitsmediums durch den Ausströmabschnitt des Triebwerks ausströmt, und dabei einen Schub erzeugt, welcher als Umfangskraft an der Scheibe wirksam wird, in der stromab der Scheibe gelegenen Sektion (402) des ringförmigen Raumes das Arbeitsmedium in eine rein axiale Strömungsrichtung gelenkt und in Strömungskanäle (914) geleitet wird, wo durch die wirbelerzeugenden Elemente (907) Turbulenzen in die Strömung des Arbeitsmediums eingebracht werden, in die entstehende turbulente Strömung des Arbeitsmediums ein Brennstoff (925) eingebracht wird, der sich aufgrund der hohen Temperatur des Arbeitsmediums entzündet, und wobei sich an dem Querschnittssprung (913) eine stabile Flammenfront ausbildet, und wobei das entstehende Heissgas anschliessend in einer Turbine (5) entspannt wird.

19. Verfahren nach einem der Ansprüche 17 oder 18, wobei das Arbeitsmedium wenigstens einmal nach einer teilweisen Verdichtung in einem Teil des Verdichters durch einen Kühler geleitet wird, und anschliessend einem weiteren Teil des Verdichters zugeführt wird.

20. Verfahren nach einem der Ansprüche 17 oder 18, wobei das Arbeitsmedium wenigstens einmal nach einer Teilexpansion in einem Teil der Turbine nacherhitzt und dann zur weiteren Expansion einem weiteren Teil der Turbine zugeführt wird.
